(19) **Europäisches Patentamt / European Patent Office / Office européen des brevets**

(11) **EP 2 934 771 B1**

(12) **FASCICULE DE BREVET EUROPEEN**

(45) Date de publication et mention de la délivrance du brevet:
**21.08.2019 Bulletin 2019/34**

(21) Numéro de dépôt: **13818332.2**

(22) Date de dépôt: **17.12.2013**

(51) Int Cl.:
**B07C 5/10** *(2006.01)*    **G01B 11/26** *(2006.01)*

(86) Numéro de dépôt international:
**PCT/FR2013/053129**

(87) Numéro de publication internationale:
**WO 2014/096680 (26.06.2014 Gazette 2014/26)**

(54) **PROCEDE ET DISPOSITIF DE MESURE DE LA VERTICALITE SUR UN RECIPIENT**

VERFAHREN UND VORRICHTUNG ZUR MESSUNG DER VERTIKALITÄT EINES BEHÄLTERS

METHOD AND DEVICE FOR MEASURING THE VERTICALITY OF A CONTAINER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2012 FR 1262382**

(43) Date de publication de la demande:
**28.10.2015 Bulletin 2015/44**

(73) Titulaire: **Tiama**
**69390 Vourles (FR)**

(72) Inventeurs:
• **COCQUELIN, Benjamin**
**69600 OULLINS (FR)**
• **MACE, Ghislain**
**F-38090 Vaulx-milieu (FR)**
• **EGGENSPIELER, Alexandre**
**F-42800 Saint-Martin La Plaine (FR)**

(74) Mandataire: **Thibault, Jean-Marc**
**Cabinet Beau de Loménie**
**51, Avenue Jean Jaurès**
**B.P. 7073**
**69301 Lyon Cedex 07 (FR)**

(56) Documents cités:
**FR-A1- 2 973 501      US-A- 4 500 203**
**US-A- 6 025 910       US-A1- 2011 141 265**

**Description**

La présente invention concerne le domaine technique de l'inspection d'objets creux ou récipients au sens général, tels que par exemple des bouteilles, des pots, des flacons notamment en verre en vue d'effectuer des mesures de la verticalité de tels récipients.

Dans le domaine technique de l'inspection de récipients notamment en verre tels que des bouteilles, il apparaît le besoin de mesurer la verticalité des récipients, pour garantir en particulier, leur embouteillage ou leur conditionnement. Il est à noter que dans l'état de la technique, la verticalité d'un récipient est exprimée de diverses manières. Par exemple, la verticalité d'un récipient est exprimée sous la forme d'un angle ou d'un degré d'inclinaison. Il est également connu d'exprimer la verticalité comme l'écart entre le centre du fond du récipient et le centre d'une section transversale du récipient prise selon une hauteur sélectionnée du récipient, comme la bague par exemple. A la place de prendre en compte la différence entre les centres des deux sections du récipient, la verticalité est aussi considérée comme la mesure de l'excursion radiale, sur un tour, d'un point du récipient pris à une hauteur considérée du récipient.

Quelle que soit la manière d'exprimer la verticalité, la mesure de la verticalité d'un récipient donne une information importante sur les caractéristiques dimensionnelles d'un récipient permettant par exemple de déceler son défaut de verticalité lorsque la mesure dépasse une valeur de référence. Dans l'état de la technique, de nombreuses solutions techniques ont été proposées pour mesurer la verticalité des bouteilles.

Par exemple, le brevet US 4 433 785 décrit un système de détection comportant deux roues libres en contact avec le fond de la bouteille. Pendant la rotation du récipient dans un poste d'inspection, les déplacements verticaux de ces deux roues sont mesurés à l'aide des capteurs de position électromagnétique. Un tel système n'est pas adapté à un contrôle à haute cadence en raison des risques de perte du contact des roues libres avec le fond des bouteilles. Par ailleurs, un tel système ne peut donner une mesure précise et présente un risque manifeste d'usure. De manière plus fondamentale, ce système mesure uniquement les mouvements du fond de la bouteille par rapport à l'axe de rotation, imposé par le poste d'inspection. De fait, lorsque le récipient présente par exemple des déformations sur le corps, il ne tourne plus autour de son axe de symétrie de sorte que la mesure de verticalité est fausse.

Le brevet US 7 010 863 décrit une autre technique consistant à remplacer les deux roues libres par deux capteurs optiques de mesure permettant de diriger une lumière en deux points du fond de la bouteille reposant sur un plan de pose. A partir de la lumière réfléchie par la bouteille et de la rotation de la bouteille, l'écart entre le plan de pose et un plan perpendiculaire à l'axe de rotation est déterminé en vue d'en déduire un défaut de verticalité. Un tel dispositif permet d'éliminer les inconvénients liés à l'utilisation de roues libres. Toutefois, le principe de mesure d'un tel dispositif repose sur l'hypothèse que le récipient est parfait en tout point à l'exception du fond qui est incliné. Cette hypothèse conduit à considérer que l'axe central du récipient est confondu avec l'axe de rotation du poste d'inspection de sorte qu'il suffit de mesurer les déplacements du fond du récipient. Or, en pratique l'axe du récipient n'est pas confondu avec l'axe de rotation du poste d'inspection. Aussi, la technique antérieure ne permet pas de donner une mesure réelle de la verticalité d'un récipient. De façon supplémentaire, les solutions antérieures connues ne permettent pas de mesurer la verticalité du col de tels récipients.

La demande de brevet EP 0 341 849 décrit un procédé pour mesurer le profil et la verticalité d'un récipient présentant un fond à partir duquel s'élève une paroi verticale. Le récipient est posé librement sur un plan d'appui qui est piloté en rotation pour permettre de réaliser des mesures sur toute la périphérie du récipient. Le plan d'appui du récipient sert de plan de référence pour la mesure de la verticalité. Or, dans le domaine de la mesure industrielle, les mesures de verticalité réalisées à partir d'une référence prise sur le système de manipulation ne sont pas fiables. Tel est le cas notamment pour la mesure de la verticalité de récipients sur un poste tournant situé sur une ligne de fabrication. En effet, un tel poste tournant de contrôle comporte un plan de pose pour le récipient et un système de mise en rotation du récipient, composé d'un galet d'entraînement en rotation du récipient qui se trouve placé en appui sur au moins deux butées lors de sa rotation. L'axe de rotation du récipient varie constamment de sorte que le mouvement est aléatoire et imprédictible. Par ailleurs, il s'avère impossible de placer le fond du récipient dans le plan de référence constitué par le plan de pose compte tenu en particulier, de la section non circulaire des récipients (ovalisés ou avec méplats), de la présence de fonds boiteux, des déformations du récipient et des défauts affectant le système de mise en rotation du récipient.

Le document FR 2 973 501 décrit un dispositif de mesure de la verticalité de récipients. Alors que le récipient est mis en rotation, les positions de points de mesure sur le fond du récipient sont mesurées. Les mesures réalisées par un tel dispositif ne sont pas totalement correctes car il ne prend pas en compte, au cours de la rotation des récipients, les éventuels déplacements latéraux du fond des récipients.

Le brevet US 6 212 962 décrit également un dispositif d'inspection de récipients défilant en translation destiné en particulier à déterminer l'inclinaison du corps du récipient par rapport à son fond. Un tel dispositif ne permet pas de déceler un défaut de verticalité dans le cas où l'article présenterait par exemple une déformation de sa paroi à la hauteur de mesure d'un produit de référence. Ainsi, un creux, méplat ou ovalisation à une hauteur donnée conduirait de manière erronée à considérer l'article comme incliné.

La demande de brevet WO 2012/042582 décrit un dispositif d'inspection de bouteilles en verre visant à contrôler avec précision l'obliquité de la surface supérieure du goulot des bouteilles. Un système d'imagerie du goulot de la bouteille permet de détecter sur une image du goulot, deux points situés à la surface supérieure du goulot de la bouteille. Simultanément, deux points situés à l'extrémité inférieure de la bouteille sont détectés sur une image du jable prise par un système d'imagerie du jable. L'inclinaison des deux points du jable sert à compenser l'inclinaison des deux points du goulot, ce qui permet de calculer l'obliquité supérieure de la bouteille et par suite, de contrôler l'obliquité de la surface supérieure du goulot de la bouteille. Un tel dispositif n'est pas apte à mesurer le défaut de verticalité d'une bouteille qui est un défaut de forme du corps ou du col de la bouteille et ne nécessitant pas de connaître l'inclinaison de la surface de la bague d'une bouteille.

Le document US 2011/141265 décrit un procédé de contrôle de la qualité de récipients sortant de la machine de formage. Les récipients étant encore chauds, ils ne peuvent pas être manutentionnés en rotation en raison de leur fragilité. Or il est évident que la rotation permet avec un nombre limité de capteurs, d'obtenir un grand nombre d'images qui contribue à la précision.

Par ailleurs, ce procédé prend des images du récipient permettant de déterminer, par traitement, les bords latéraux opposés du récipient. Ce procédé détermine le long de lignes horizontales réparties selon la hauteur du récipient, les milieux des bords opposés du récipient, puis détermine des segments de droites passant par lesdits milieux, et considère comme mesure de verticalité, les angles de ces segments par rapport à la verticale, c'est-à-dire selon les Figures 18 à 21 par rapport au convoyeur. La mesure de verticalité proposée n'est pas juste car elle ne prend pas en compte la véritable verticalité du corps ou du col qui doit être idéalement prise par rapport au fond du récipient. En effet, la position du fond est supposée dans ce procédé identique à la position du convoyeur, ce qui est erroné.

De même, le brevet US 6 025 910 décrit une technique d'inspection de bouteilles défilant en translation devant un poste de contrôle visant à prendre des images successives de chaque récipient en vue de les analyser en vue de déterminer en particulier l'inclinaison des bouteilles. Ce brevet présente les mêmes inconvénients que les dispositifs décrits par les documents US 6 212 962 et WO 2012/042582 puisque ce brevet ne prend pas en compte la forme du corps ou du col de la bouteille.

La présente invention vise donc à remédier aux inconvénients de l'état de la technique en proposant une nouvelle technique permettant de mesurer la verticalité réelle présentée par des récipients, ces mesures étant réalisées sur la ligne de fabrication par un poste tournant pour permettre des mesures sur toute la périphérie des récipients.

Pour atteindre un tel objectif, l'objet de l'invention propose un procédé pour mesurer une verticalité sur un récipient reposant sur un plan de pose et présentant une bague et un fond, à partir duquel s'élève une paroi verticale reliée au fond par un talon, la paroi verticale présentant un col pourvu ou non à sa base d'une épaule, le procédé consistant :

- à disposer d'un côté du récipient, au moins une caméra délivrant des images du récipient et dont l'axe optique d'observation est sensiblement orthogonal à l'axe vertical du récipient, et dont le champ latéral s'étend selon une direction transversale orthogonale à l'axe vertical et à l'axe optique,
- à réaliser lors d'une étape de prise d'images, au moins une image du récipient, de manière à obtenir l'image du bord gauche de la bague, l'image du bord droit de la bague, l'image matricielle du bord gauche du talon, de l'épaule et/ou de la base du col, l'image matricielle du bord droit, respectivement du talon, de l'épaule et/ou de la base du col,
- à analyser, lors d'une étape d'analyse :

    * l'image du bord gauche de la bague et l'image du bord droit de la bague afin de déterminer la position réelle de la bague,
    * l'image matricielle du bord gauche afin de déterminer un point de positionnement gauche,
    * l'image matricielle du bord droit afin de déterminer un point de positionnement droit,

tel que :

- on définit une hauteur réelle pour le récipient,

et le procédé consistant aussi :

- à faire tourner le récipient en rotation sur lui-même autour d'un axe vertical proche de l'axe de symétrie de l'article,
- et pour chaque incrément de rotation du récipient sur au moins un demi-tour de rotation :

    • à réaliser l'étape de prise d'image du récipient,
    • à analyser lors de l'étape d'analyse,

* les images des bords gauche et droit de la bague afin de déterminer au moins la coordonnée selon la direction transversale, de la position réelle de la bague,

* l'image matricielle du bord gauche afin de déterminer les coordonnées selon les directions transversale et verticale, du point de positionnement gauche,

* l'image matricielle du bord droit afin de déterminer les coordonnées selon les directions transversale et verticale, du point de positionnement droit,

• à définir, sur une perpendiculaire au segment de droite passant par les points de positionnement gauche et droit, à la hauteur réelle du récipient prise à partir de ce segment de droite, au moins la coordonnée selon la direction transversale, d'une position théorique de la bague,

- et à partir des coordonnées de la position réelle de la bague et de la position théorique de la bague, prises sur au moins un demi-tour du récipient, à déduire des variations de l'écart de leur position, une mesure de verticalité pour le récipient.

De plus, le procédé selon l'invention comporte en outre en combinaison au moins l'une et/ou l'autre des caractéristiques additionnelles suivantes :

- réaliser en tant qu'images matricielles gauche et droite, des images matricielles du talon, de l'épaule et/ou de la base du col afin de mesurer la verticalité du col du récipient, du corps du récipient, et/ou la verticalité totale,
- pour chaque incrément de rotation, déterminer la position réelle de la bague en analysant une image linéaire ou matricielle comprenant selon la direction transversale la globalité de la bague, en déterminant les positions respectives du bord droit et du bord gauche de la bague et en calculant un point dépendant de ces deux bords,
- pour chaque récipient :

  • à caractériser la forme et la position initiale du bord gauche et du bord droit du récipient dans la première image matricielle respectivement gauche et droite, prise lors de la rotation du récipient,
  • à rechercher, dans chaque image matricielle suivante respectivement gauche et droite prise lors de la rotation du récipient, la forme du bord du récipient respectivement gauche et droit, caractérisée dans la première image, afin de déterminer les points de positionnement gauche et droit,

- déterminer les points de positionnement gauche et droit, dans l'image initiale en les choisissant de manière à être symétriques par rapport à l'axe de symétrie du récipient, en faisant entre eux une distance de l'ordre du diamètre du plan de pose ou du récipient,
- déterminer les points de positionnement gauche et droit dans l'image initiale en les choisissant de manière à les situer dans le plan de pose,
- caractériser la forme du bord droit et du bord gauche du récipient, par au moins le contour du récipient apparaissant dans l'image matricielle et décrit par un ensemble de points et/ou de segments et/ou de portions de courbes, et en ce qu'il consiste à rechercher au moins le contour caractérisé dans la première image, dans chaque image suivante, en tentant de superposer au moins ledit contour avec le contour présent dans chaque image suivante à l'aide d'opérations de translation et/ou de rotation,
- pour chaque type de récipient, déterminer la distance de la position théorique de la bague par rapport au segment de la droite, à partir d'une mesure ou d'une constante déterminée,
- réaliser une image du bord gauche et une image du bord droit incluant une visualisation du bord supérieur du récipient, de manière à déterminer la hauteur du récipient.

Un autre objet de l'invention est de proposer un dispositif pour mesurer une verticalité sur un récipient présentant une bague et un fond, à partir duquel s'élève une paroi verticale reliée au fond par un talon, la paroi verticale présentant un col pourvu ou non à sa base d'une épaule, le dispositif comprenant :

- un système de mise en rotation du récipient sur lui-même autour de son axe de symétrie vertical,
- au moins une caméra disposée d'un côté du récipient et délivrant une séquences d'images du récipient sur au moins un demi-tour de rotation, et dont l'axe optique d'observation est sensiblement orthogonal à l'axe de rotation du récipient, et dont le champ latéral s'étend selon une direction orthogonale à l'axe de symétrie vertical et l'axe optique,
- une unité d'enregistrement des séquences d'images des récipients,

- une unité d'analyse des images et séquences d'image fournies par au moins la caméra, et reliée à l'unité d'enregistrement.

Selon l'invention :

- au moins une caméra réalise, pour chaque incrément de rotation au moins une image des bords gauche et droit de la bague, l'image matricielle gauche du talon, de l'épaule et/ou de la base du col, l'image matricielle droite, respectivement du talon, de l'épaule et/ou de la base du col de l'article,
- l'unité de traitement assure :

  • l'analyse de :

    * l'image du bord gauche de la bague et l'image du bord droit de la bague afin de déterminer au moins la coordonnée selon la direction transversale, de la position réelle de la bague,
    * l'image matricielle du bord gauche afin de déterminer les coordonnées selon les directions transversale et verticale, d'un point de positionnement gauche,
    * l'image matricielle du bord droit afin de déterminer les coordonnées selon les directions transversale et verticale, d'un point de positionnement droit,

  • la prise en compte d'une hauteur réelle du récipient,
  • la détermination sur une perpendiculaire au segment de droite passant par les points de positionnement gauche et droit, à la hauteur réelle du récipient prise à partir de ce segment de droite, au moins la coordonnée selon la direction transversale d'une position théorique de la bague,
  • l'analyse des coordonnées de la position réelle de la bague et de la position théorique de la bague, prises en considération au cours d'au moins un demi-tour du récipient, pour déduire des variations de l'écart de leur position, une mesure de verticalité pour le récipient.

De plus, le dispositif selon l'invention comprend en outre en combinaison au moins l'une et/ou l'autre des caractéristiques additionnelles suivantes :

- une caméra linéaire dont le réseau est placé dans un plan perpendiculaire à l'axe de rotation et coupant la bague du récipient en-dessous de son sommet, de manière à transmettre à l'unité d'analyse, pour chaque incrément de rotation, une coupe horizontale de la bague, dans laquelle se distinguent les deux bords de la bague,
- une caméra matricielle dont l'axe optique d'observation passe au voisinage de l'axe vertical de l'article et sous ou en englobant le sommet de la bague, de manière à transmettre à l'unité d'analyse, pour chaque incrément de rotation, une image matricielle de la bague,
- une caméra matricielle dont l'axe optique d'observation passe au voisinage de l'axe vertical du récipient et au-dessus du fond du récipient, de manière à ce que les deux talons droit et gauche soient constamment dans son champ d'observation, de manière à transmettre à l'unité d'analyse, pour chaque incrément de rotation, une image matricielle des deux talons,
- un dispositif optique par exemple catoptrique et /ou prismatique installé entre la caméra observant le fond et l'article inspecté, de manière à optimiser le champ, le dit dispositif pouvant être prévu réglable pour l'adapter au diamètre du récipient,
- deux caméras matricielles synchrones dont les axes optiques d'observation respectifs sont orthogonaux à l'axe vertical du récipient et au-dessus du fond du récipient, le champ de la première caméra comprenant uniquement le talon droit, l'autre le talon gauche, de manière à transmettre à l'unité d'analyse, pour chaque incrément de rotation, une image matricielle pour chaque talon.

Diverses autres caractéristiques ressortent de la description faite ci-dessous en référence aux dessins annexés qui montrent, à titre d'exemples non limitatifs, des formes de réalisation de l'objet de l'invention.

La **Figure 1** est une vue schématique montrant en élévation un exemple de réalisation d'un dispositif de vision conforme à l'invention.
La **Figure 2** est une vue de dessus montrant un exemple d'entraînement en rotation d'un récipient lors de la mesure de verticalité par le dispositif de vision conforme à l'invention.
La **Figure 3** illustre de manière schématique un exemple d'images prises de la bague et du jable d'un récipient.
La **Figure 4** montre une image d'une bague sur laquelle apparaissent la position réelle Cr de la bague et la position théorique Ct de la bague.

La **Figure 5** est une courbe montrant le déplacement latéral XCr de la position réelle Cr de la bague pendant au moins un tour du récipient.

La **Figure 6** est une vue illustrant le jable d'un récipient auquel des points de positionnement gauche Tg et droit Td sont associés.

La **Figure 7** montre à grande échelle, l'image du jable droit d'un récipient auquel est associé un point de positionnement Td.

La **Figure 8** est une courbe montrant le déplacement latéral, c'est-à-dire les variations de la coordonnée XTd du point de positionnement droit Td du jable droit pendant au moins un tour du récipient.

Les **Figures 9** et **10** sont deux vues d'images successives explicitant le principe de l'invention.

La **Figure 11** est un schéma illustrant le principe de mesure conforme à l'invention.

La **Figure 12** est une courbe montrant l'écart entre la position mesurée de la bague et la position attendue de la bague du récipient sur au moins un tour de rotation du récipient.

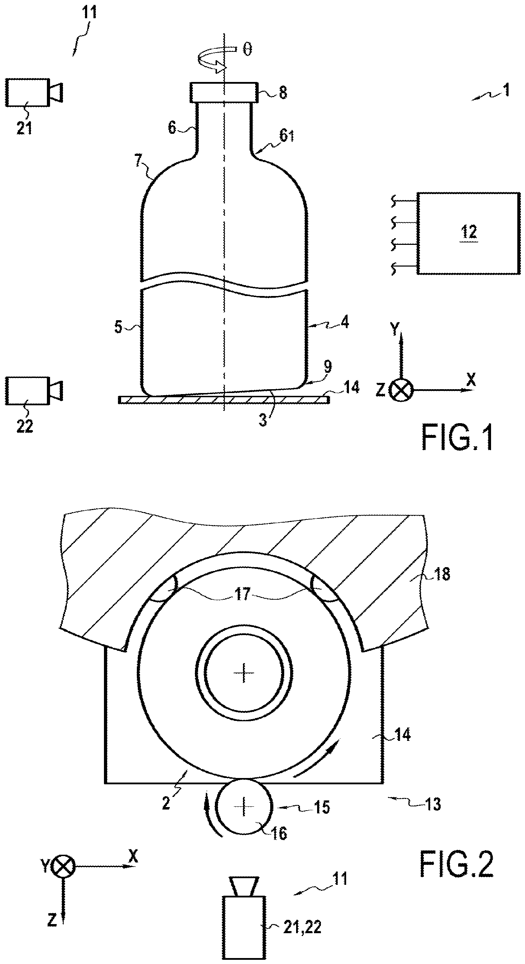

Tel que cela ressort plus précisément des **Fig. 1** et **2,** l'objet de l'invention concerne un dispositif **1** pour mesurer la verticalité sur des récipients **2** par exemple en verre tels que des bouteilles. De manière classique, chaque récipient **2** présente un fond **3** à partir duquel s'élève une paroi verticale **4**. Dans le cas d'un récipient du type bouteille, la paroi verticale **4** présente à partir du fond **3,** une partie **5** formant le corps de la bouteille qui se raccorde à un col **6** par l'intermédiaire d'une épaule **7**. Le col **6** présente à l'opposé de sa base **6₁** de raccordement avec l'épaule **7,** une partie dite de bague ou goulot **8**. A l'opposé, le corps **5** du récipient **2** se raccorde au fond **3** par un talon ou jable **9**.

Le dispositif de détection **1** comporte un système de vision **11** relié à une unité d'analyse et de traitement **12** permettant de déterminer la mesure de verticalité des récipients **2**.

La mesure de verticalité d'un récipient **2** est réalisée alors que le récipient **2** est mis en rotation sur lui-même (angle θ) selon l'axe vertical **Y** pendant au moins un demi-tour de rotation. A cet égard, chaque récipient **2** est pris en charge par un système d'entraînement **13**. Par exemple, le système d'entraînement **13** comporte un plan de glisse ou de pose **14** pour le fond **3** du récipient **2** ainsi qu'un système de mise en rotation **15** comportant un galet d'entraînement en rotation du récipient ou tournette **16** qui est assujetti en appui par son corps **5** sur deux butées **17**. Ces deux butées **17** font partie par exemple d'une étoile de manutention **18** permettant d'amener successivement des récipients **2** devant le système de vision **11**.

Chaque récipient **2** reste devant le dispositif de détection **1** pendant le temps nécessaire afin d'effectuer au moins un demi-tour sur lui-même pendant lequel des mesures sont réalisées comme cela sera expliqué dans la suite de la description. Les systèmes d'entraînement **13** et de mise en rotation **15** ne sont pas décrits plus précisément car ils ne font pas partie de l'objet de l'invention et sont bien connus de l'homme du métier. Il est à considérer que le système de mise en rotation **15** n'est pas à même de placer les récipients **2** dans une position fixe reproductible par rapport au dispositif de détection **1** et en particulier sur le plan de glisse **14**. Ainsi, comme illustré à la **Fig. 1,** le fond **3** du récipient peut ne pas être entièrement en appui sur le plan de glisse **14** lors de la rotation du récipient.

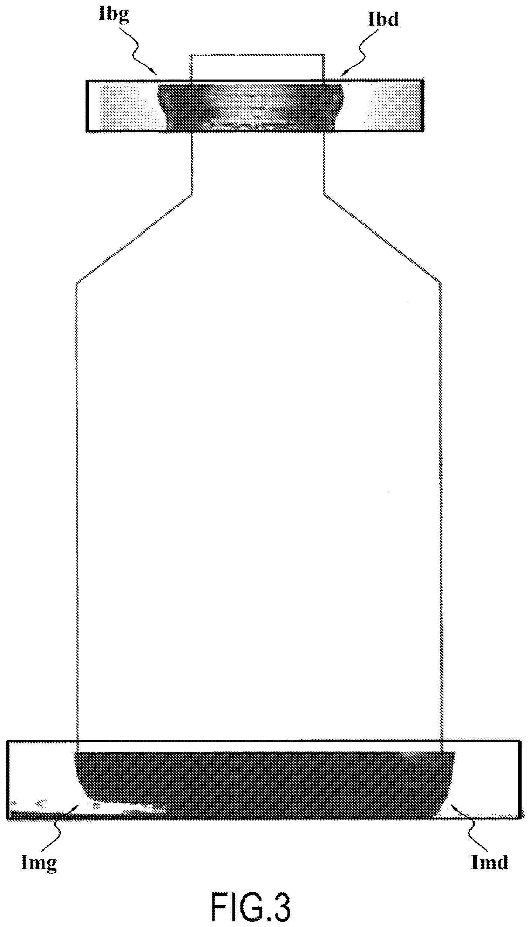

Le système de vision **11** comporte au moins une caméra et dans l'exemple illustré sur les **Fig. 1** et **2,** une première caméra **21** reliée à l'unité d'analyse et de traitement **12** et adaptée pour réaliser des images du récipient **2** de manière à obtenir au moins l'image **Ibg** du bord gauche de la bague **8** et l'image **Ibd** du bord droit de la bague **8**. Cette caméra **21** possède un axe optique d'observation **Z** sensiblement orthogonal à l'axe vertical **Y** du récipient **2** et présente un champ latéral s'étendant selon une direction transversale **X** orthogonale à l'axe vertical **Y** et à l'axe optique **Z**. Selon un exemple de réalisation, cette première caméra est une caméra linéaire dont le réseau est placé dans un plan perpendiculaire à l'axe de rotation et coupant la bague **8** du récipient en-dessous de son sommet, de manière à transmettre à l'unité d'analyse **12,** pour chaque incrément de rotation, une coupe horizontale de la bague, dans laquelle se distinguent les deux bords de la bague, appelés bord gauche et bord droit en considération de leur position apparaissant sur chacune des images prises par la caméra **(Fig. 3).** La qualification gauche ou droite est ainsi donnée du point de vue de l'observation à chaque prise de vue car un récipient de révolution ne comporte pas à proprement dit de côté gauche ou droit.

Selon la variante de réalisation illustrée à la **Fig. 3,** le dispositif comprend une première caméra matricielle **21** dont l'axe optique d'observation **Z** passe au voisinage de l'axe vertical **Y** du récipient **2** en englobant les deux côtés du récipient, de manière à transmettre à l'unité de traitement et d'analyse **12,** pour chaque incrément de rotation, une seule image matricielle de la bague incluant les images **Ibg, Ibd** des bords gauche et droit de la bague **8**. Il est à noter que l'observation des deux côtés de la bague à l'aide de deux caméras est possible mais sans intérêt technique ou économique.

Le dispositif de vision **11** selon l'invention comporte également au moins une deuxième caméra **22** reliée à l'unité de traitement et d'analyse **12** et adaptée pour réaliser des images du récipient **2** de manière à obtenir une image matricielle des bords gauche et droit d'une zone d'intérêt du récipient évoluant rapidement dans le plan d'observation défini par l'axe vertical **Y** et l'axe transversal **X**. Ainsi, la caméra matricielle **22** prend en tant que zones d'intérêt une image matricielle gauche **Img** du talon **9,** de l'épaule **7** et/ou de la base **6₁** du col du récipient et une image matricielle droite **Imd** respectivement du talon **9,** de l'épaule **7** et/ou de la base **6₁** du col du récipient.

Dans l'exemple illustré sur les dessins, le dispositif de vision **11** comprend une caméra matricielle **22** dont l'axe optique d'observation **Z** passe au voisinage de l'axe vertical **Y** du récipient en englobant le fond **3** du récipient, de manière à ce que les deux talons **9** droit et gauche soient constamment dans son champ d'observation, de manière à transmettre à l'unité de traitement et d'analyse **2,** pour chaque incrément de rotation, une image matricielle des deux talons.

Bien entendu, selon cette variante de réalisation, les deux caméras **21, 22** sont synchrones. Il peut être envisagé de mettre en oeuvre une deuxième caméra matricielle **22** c'est-à-dire trois caméras en tout, de sorte que le champ de la première caméra matricielle comprend uniquement le talon droit, l'épaule droite ou la base droite du col du récipient tandis que la deuxième caméra matricielle comprend uniquement le talon gauche, l'épaule gauche ou la bague gauche du col du récipient de manière à transmettre à l'unité d'analyse **12,** pour chaque incrément de rotation, des images matricielles gauche et droite du talon, de l'épaule ou de la base du col du récipient. Il est à noter que les deux caméras matricielles ne sont pas nécessairement disposées de manière à prendre des images de deux zones d'intérêt du récipient disposées de manière symétriquement opposées de part et d'autre du récipient.

Selon une autre variante de réalisation, il peut être prévu de mettre en oeuvre une seule caméra matricielle observant le récipient **2** pour disposer d'images des bords gauche et droit de la bague **Ibg, Ibd** et des images matricielles des bords gauche et droit **Img, Imd** du jable, de l'épaule et/ou de la base du col.

Il est à noter que la réalisation d'images **Ibg, Ibd** des bords gauche et droit de la bague **8** en combinaison avec les images matricielles **Img, Imd** des talons gauche et droit permet de mesurer la verticalité du récipient **2,** à savoir la verticalité totale du récipient.

Il est à noter que la ou les caméras matricielles **22** peuvent être adaptées pour réaliser des images matricielles gauche et droite de l'épaule ou de la base **6₁** du col **6** du récipient de manière à permettre :

- en combinaison avec la réalisation des images des bords gauche et droit de la bague **Ibg, Ibd,** à permettre la mesure de verticalité du col **6** du récipient.
- et/ou en combinaison avec la réalisation des images matricielles gauche et droite du talon **Img, Imd,** à permettre la mesure de verticalité du corps **5** du récipient.

Ainsi, le dispositif **1** selon l'invention est adapté pour permettre la mesure de verticalité totale du récipient et/ou du col du récipient et/ou du corps du récipient. La suite de la description décrira la mesure de la verticalité totale du récipient mais il est clair que l'homme du métier adaptera la description de l'invention pour les mesures de verticalité du corps ou du col du récipient **2.**

Selon une variante avantageuse de réalisation, le dispositif **1** comporte un dispositif optique par exemple catoptrique et /ou prismatique installé entre la caméra **22** observant le fond et le récipient inspecté, de manière à optimiser le champ, le dit dispositif pouvant être prévu réglable pour l'adapter au diamètre du récipient.

De même, il peut être envisagé d'interposer au moins un dispositif optique entre le récipient **2** et l'une et/ou l'autre des caméras **21, 22** de manière à conférer à la caméra une observation télécentrique. Un tel dispositif optique à observation télécentrique peut être mis en oeuvre seul ou en combinaison avec le dispositif optique catoptrique et/ou prismatique.

Bien entendu, le dispositif selon l'invention comporte une ou plusieurs sources d'éclairage de tous types pour permettre aux caméras la prise d'images permettant leur analyse. Par exemple, un retro éclairage ou « back light », source uniforme située à l'opposé de la caméra par rapport à l'objet, constitue une solution bien connue de l'homme du métier, pour réaliser des contrôles dimensionnels au moyen de systèmes de vision.

Lorsque la caméra **21** est de type linéaire, il est possible d'utiliser par exemple un système tel qu'un « mesureur de profil » ou micromètre commercialisé sous la dénomination « KEYENCE LS7000 ». De tels systèmes comprennent comme éclairage une source fournissant un faisceau parallèle en forme de nappe plane, souvent de type Laser. Le capteur permet alors de mesurer les dimensions et positions des parties occultées de la nappe de lumière, sans nécessairement disposer un objectif classique devant la caméra.

Les caméras **21, 22** sont pilotées par l'unité d'analyse et de traitement **12** de manière que sur au moins un demi-tour de rotation du récipient **2,** et pour chaque incrément de rotation du récipient **2,** les caméras puissent prendre l'image **Ibg** du bord gauche de la bague, l'image **Ibd** du bord droit de la bague et les images matricielles **Img, Imd** des talons gauche et droit, des épaules droite et gauche et/ou les images matricielles des bases gauche et droite du col du récipient **2.**

L'unité de traitement **12** analyse pour chaque incrément de rotation du récipient **2,** l'image **Ibg** du bord gauche de la bague **8** et l'image **Ibd** du bord droit de la bague **8** afin de déterminer au moins la coordonnée **XCr** selon la position transversale de la position réelle **Cr** de la bague **8.**

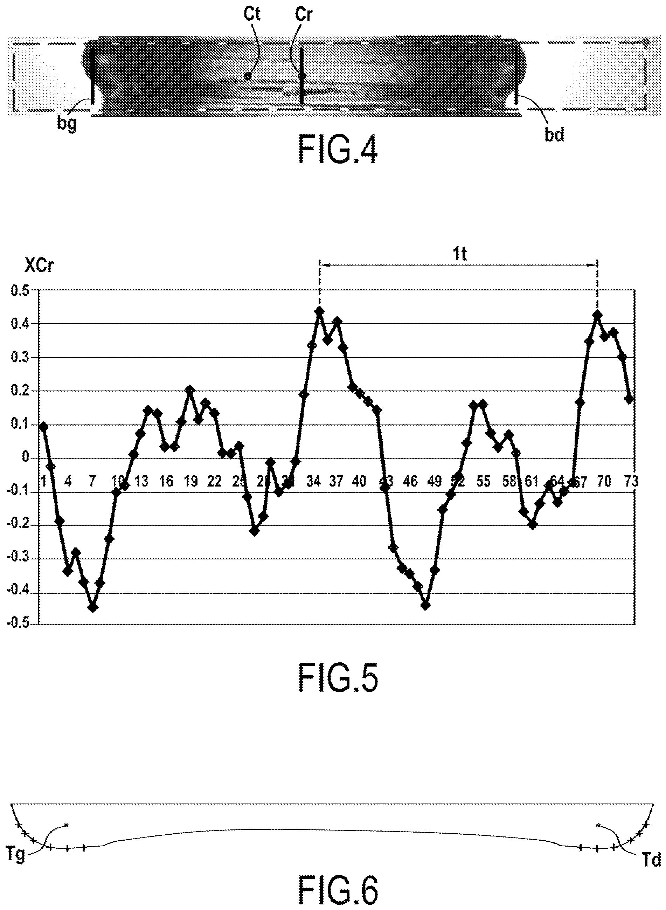

L'unité de traitement et d'analyse **12** détermine la position transversale de la position réelle de la bague **8** en analysant les images **Ibg** et **Ibd** de manière à déterminer les positions respectives du bord gauche **bg** de la bague **8** et du bord droit **bd** de la bague **8** (Fig. 4). A partir des positions selon l'axe **X,** des bords gauche **bg** et droit **bd,** la position réelle **Cr** de la bague **8** est déterminée en un point dépendant de ces bords gauche et droit. Par exemple, le point milieu entre les positions respectives des bords droit **bd** et gauche **bg** est choisi pour correspondre à la position réelle **Cr** de la bague **8.** Il est à noter que la coordonnée **XCr** de la position selon l'axe transversal de la position réelle **Cr** de la bague **8** peut être choisie de manière quelconque par rapport aux coordonnées selon l'axe transversal, des bords gauche **bg** et droit **bd.**

La **Fig. 5** illustre le déplacement latéral **XCr** selon l'axe transversal **X** de la position réelle **Cr** de la bague pendant au moins un tour de rotation du récipient **2.**

De même, l'unité de traitement **12** analyse pour chaque incrément de rotation du récipient **2,** l'image **Img** matricielle du bord gauche afin de déterminer les coordonnées **XTg, YTg** selon les directions transversale **X** et verticale **Y,** d'un point de positionnement gauche **Tg,** et l'image matricielle du bord droit **Imd** afin de déterminer les coordonnées **XTd, YTd** selon les directions transversale **X** et verticale **Y,** d'un point de positionnement droit **Td.**

D'une manière générale, il doit être considéré que les points de positionnement gauche **Tg** et droit **Td** constituent des points de repère ou d'identification de la position du bord du récipient respectivement gauche et droit. Les points de positionnement **Td, Tg** peuvent être choisis de manière quelconque par rapport aux bords gauche et droit du récipient **2.** Il est à noter que la détermination des points de positionnement gauche **Tg** et droit **Td,** à l'aide de leurs coordonnées selon les deux directions **X, Y** confère une bonne précision à la mesure.

Selon une variante avantageuse de réalisation, le dispositif consiste à déterminer les points de positionnement gauche **Tg** et droit **Td** dans l'image initiale en les choisissant de manière à les situer dans le plan de pose.

Selon une autre variante de réalisation, les points de positionnement gauche **Tg** et droit **Td** sont choisis de manière à être symétriques par rapport à l'axe de symétrie **Y** du récipient, en faisant entre eux une distance de l'ordre du diamètre du plan de pose ou du récipient **2 (Fig. 6).**

Selon une variante préférée de réalisation, l'unité de traitement et d'analyse **12** détermine les points de positionnement gauche **Tg** et droit **Td** de la manière suivante.

Pour chaque récipient **2,** la forme et la position initiale du bord gauche et du bord droit du récipient sont déterminées dans la première image matricielle respectivement gauche **Img** et droite **Imd.** Ensuite, l'unité de traitement et d'analyse **12** recherche, dans chaque image matricielle suivante gauche **Img** et droite **Imd,** la forme du bord du récipient respectivement gauche et droit qui a été caractérisée dans la première image afin de déterminer les points de positionnement gauche **Tg** et droit **Td.**

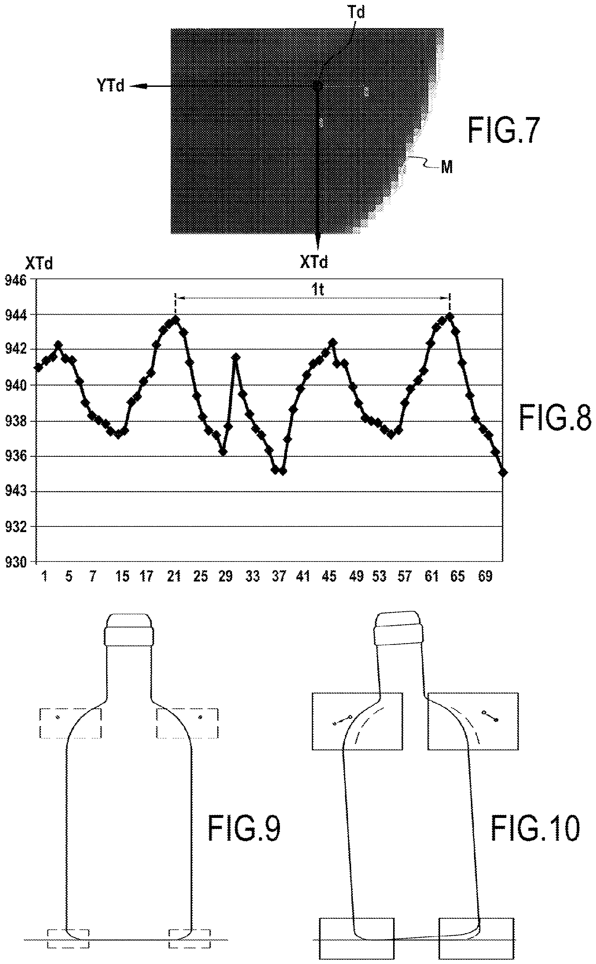

Avantageusement, la caractérisation de la forme du bord droit et du bord gauche du récipient dans les images matricielles est réalisée par au moins le contour **M** du récipient apparaissant dans l'image matricielle **(Fig. 7).** Le contour **M** est décrit par un ensemble de points et/ou de segments et/ou de portions de courbes. Il est à noter que la forme du récipient dans les images peut être caractérisée par tout ou partie du contour **M** et/ou par tout ou partie de l'image associée à ce contour **M.**

Ainsi, l'unité de traitement et d'analyse **12** recherche le contour **M** du récipient caractérisé dans la première image matricielle, dans chaque image suivante en tentant de superposer ledit contour **M** avec le contour présent dans chaque image suivante à l'aide d'opérations de translation et/ou de rotation **(Fig. 9, 10).** L'opération de superposition peut aussi mettre en oeuvre toute autre méthode de « pattern matching » visant à la superposition d'une partie d'une image avec une autre partie d'image.

La superposition des contours (voire d'une partie des images) présents dans chaque image suivante par rapport au contour (ou partie d'une image) caractérisé dans la première image permet de déterminer pour chacune de ces images, la position des points de positionnement gauche **Tg** et droit **Td.** La **Fig. 8** donne un exemple de la coordonnée **XTd** selon l'axe transversal **X** du point de positionnement droit **Td** pendant la rotation d'au moins un tour du récipient **2.**

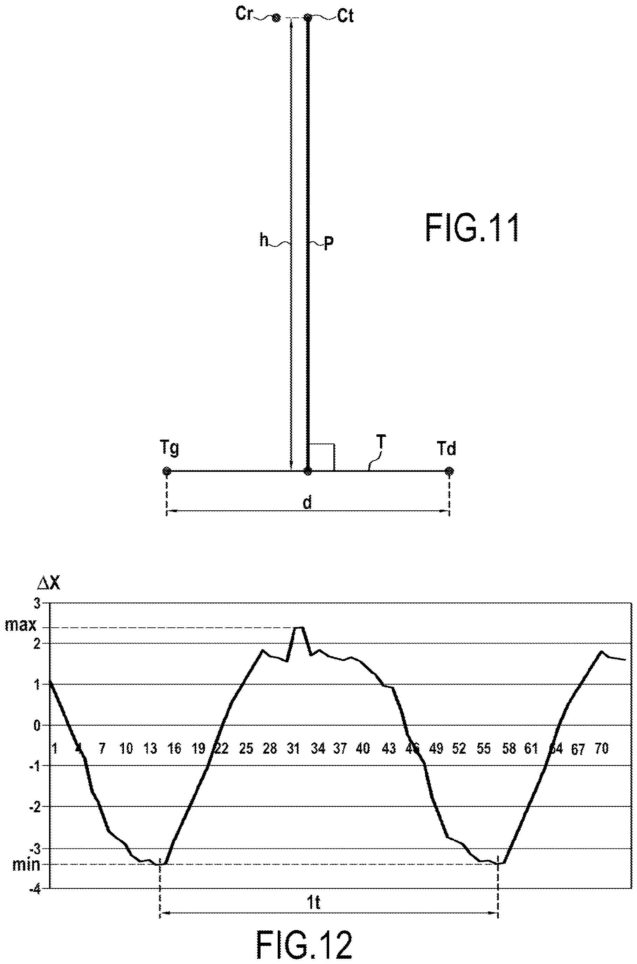

L'unité de traitement **12** détermine pour chaque incrément de rotation du récipient **2,** sur une perpendiculaire **P** au segment d'une droite **T** passant par les points de positionnement gauche **Tg** et droit **Td,** à une distance déterminée **h** du segment de droite **T,** au moins la coordonnée **XCt** selon la direction transversale d'une position attendue dit théorique **Ct (Fig. 11).** Il doit être compris que les variations de la coordonnée **XCt** de la position théorique **Ct** de la bague dépendent des variations de position du fond du récipient et par suite de l'assiette du récipient **2.**

La distance **h** correspond à la hauteur réelle du récipient. Cette hauteur **h** de la position réelle de la bague par rapport au segment de la droite **T** est définie pour chaque type de récipient **2** ou pour chaque récipient **2,** à partir d'une mesure ou d'une constante choisie. Cette hauteur qui est par exemple enregistrée est prise en compte par l'unité de traitement **12** lors du traitement.

Bien entendu, la perpendiculaire **P** est prise au même endroit sur le segment de droite **T** pour l'ensemble des images matricielles correspondant à chaque incrément de rotation du récipient **2.** Par exemple, la perpendiculaire **P** est prise au centre des deux points de positionnement **Tg, Td.**

La position théorique **Ct** de la bague est comparée par rapport à la position réelle **Cr** de la bague déterminée à partir des images **Ibg** et **Ibd** de la bague.

L'unité de traitement **12** analyse les variations selon la direction transversale **X,** des coordonnées de la position réelle **Cr** de la bague et de la position théorique **Ct** de la bague, prises en considération au cours d'au moins un demi-tour du récipient, de manière à déduire de la variation de l'écart de leurs positions, la mesure de verticalité pour le récipient.

Selon la variante préférée de réalisation, la coordonnée **XCt** selon la direction transversale **X** de la position théorique **Ct** est donnée, pour chaque incrément de rotation θ du récipient **2,** par la formule suivante :

$$X_{Ct}(\theta) = \frac{h}{d}\left(\frac{XTd(\theta) + XTg(\theta)}{2}\right)$$

Pour chaque incrément de rotation θ du récipient **2,** il est calculé, l'écart △**X** entre la coordonnée **XCr,** selon la direction transversale **X** de la position réelle **Cr** de la bague et la coordonnée **XCt** selon la direction transversale **X,** de la coordonnée de la position théorique **Ct** de la bague.

Soit :

$$\Delta X(\theta) = X_{Cr}(\theta) - X_{Ct}(\theta)$$

Pour au moins un demi-tour de rotation du récipient **2,** la variation de l'écart △**X** est analysée afin d'en déduire une mesure de verticalité.

Soit :

$$V = max[\Delta X(\theta)] - min[\Delta X(\theta)], \text{ ou } V = \max_{\theta}[\Delta X(\theta)] - \min_{\theta}[\Delta X(\theta)]$$

avec $\underline{V}$ valeur de verticalité.

Tel que cela ressort de la **Fig. 12,** la mesure de la verticalité est égale à l'amplitude de la courbe ou pseudo-sinusoïde montrant les écarts sur au moins un demi-tour de rotation du récipient, et selon la direction transversale **X,** de la position réelle **Cr** de la bague et de la position théorique **Ct** de la bague. En d'autres termes, la mesure de verticalité est déduite de la différence entre les valeurs minimale **(min** à la **Fig. 12)** et maximale **(max** à la **Fig. 12)** de l'écart △**X** entre les coordonnées des positions réelle et théorique de la bague. Ainsi, si l'écart △**X** entre les coordonnées des positions réelle et théorique reste constant alors la verticalité est idéale (même si cet écart △**X** est non nul).

Bien entendu, pour être certain d'observer les valeurs maximale **(max)** et minimale **(min)** de l'écart △X, il apparaît nécessaire de prendre en compte ces valeurs sur une rotation largement supérieure au demi-tour, et idéalement l'analyse se fera sur un tour complet **t.**

Selon une autre variante de réalisation, il peut être avantageux pour améliorer la précision, de prendre en compte les coordonnées selon la direction verticale **Y,** de la position théorique **Ct** de la bague et de la position réelle **Cr** de la bague. Selon cette méthode, il convient de prendre en compte, dans l'image du bord gauche et du bord droit de la bague, également le sommet de la bague, en utilisant par exemple une méthode de « pattern matching ».

La mise en oeuvre du dispositif de vision conforme à l'invention découle directement de la description qui précède. Ainsi, le procédé consiste :

- à disposer d'un côté du récipient, au moins une caméra délivrant des images du récipient et dont l'axe optique d'observation **Z** est sensiblement orthogonal à l'axe vertical **Y** du récipient, et dont le champ latéral s'étend selon une direction transversale **X** orthogonale à l'axe vertical **Y** et à l'axe optique **Z,**
- à réaliser lors d'une étape de prise d'images, au moins une image du récipient, de manière à obtenir l'image du bord gauche **Ibg** de la bague, l'image du bord droit **Ibd** de la bague, l'image matricielle du bord gauche **Img** du talon, de l'épaule et/ou de la base du col, l'image matricielle du bord droit **Imd,** respectivement du talon, de l'épaule et/ou de la base du col,
- à analyser, lors d'une étape d'analyse :

  * l'image du bord gauche de la bague et l'image du bord droit de la bague afin de déterminer la position réelle **Cr** de la bague,
  * l'image matricielle du bord gauche afin de déterminer un point de positionnement gauche Tg **(XTg, YTg),**
  * l'image matricielle du bord droit afin de déterminer un point de positionnement droit Td **(XTd, YTd),**

tel que :

- on définit une hauteur réelle h pour le récipient,

et le procédé consistant aussi :

- à faire tourner le récipient en rotation sur lui-même autour d'un axe vertical Y proche de l'axe de symétrie de l'article,
- pour chaque incrément de rotation du récipient sur au moins un demi-tour de rotation :

  • à réaliser l'étape de prise d'image du récipient,
  • à analyser lors de l'étape d'analyse,

    * les images des bords gauche et droit de la bague afin de déterminer au moins la coordonnée selon la direction transversale, de la position réelle **Cr** de la bague,
    * l'image matricielle du bord gauche afin de déterminer les coordonnées selon les directions transversale et verticale, du point de positionnement gauche Tg **(XTg, YTg),**
    * l'image matricielle du bord droit afin de déterminer les coordonnées selon les directions transversale et verticale, du point de positionnement droit Td **(XTd, YTd),**

  • à définir, sur une perpendiculaire **P** au segment de droite **T** passant par les points de positionnement gauche **Tg** et droit **Td,** à la hauteur réelle **h** du récipient prise à partir de ce segment de droite **T,** au moins la coordonnée selon la direction transversale, d'une position théorique **Ct** de la bague,

- et à partir des coordonnées de la position réelle **Cr** de la bague et de la position théorique **Ct** de la bague, prises sur au moins un demi-tour du récipient, à déduire des variations de l'écart de leur position, une mesure de verticalité pour le récipient.

L'invention n'est pas limitée aux exemples décrits et représentés car diverses modifications peuvent y être apportées sans sortir de son cadre. L'invention est définie dans les revendications 1 à 15.

## Revendications

1.  Procédé pour mesurer une verticalité sur un récipient **(2)** reposant sur un plan de pose et présentant une bague **(8)** et un fond **(3),** à partir duquel s'élève une paroi verticale **(4)** reliée au fond par un talon **(9),** la paroi verticale **(4)** présentant un col pourvu ou non à sa base d'une épaule, le procédé consistant :

    - à disposer d'un côté du récipient, au moins une caméra délivrant des images du récipient et dont l'axe optique d'observation **(Z)** est sensiblement orthogonal à l'axe vertical **(Y)** du récipient, et dont le champ latéral s'étend selon une direction transversale **(X)** orthogonale à l'axe vertical **(Y)** et à l'axe optique **(Z),**
    - à réaliser lors d'une étape de prise d'images, au moins une image du récipient, de manière à obtenir l'image du bord gauche **(Ibg)** de la bague, l'image du bord droit **(Ibd)** de la bague, l'image matricielle du bord gauche **(Img)** du talon, de l'épaule et/ou de la base du col, l'image matricielle du bord droit **(Imd),** respectivement du talon, de l'épaule et/ou de la base du col,
    - à analyser, lors d'une étape d'analyse :

      * l'image du bord gauche de la bague et l'image du bord droit de la bague afin de déterminer la position réelle **(Cr)** de la bague,
      * l'image matricielle du bord gauche afin de déterminer un point de positionnement gauche Tg **(XTg, YTg),**
      * l'image matricielle du bord droit afin de déterminer un point de positionnement droit Td **(XTd, YTd),**

    tel que :

      - on définit une hauteur réelle **(h)** pour le récipient,
      - le procédé consistant aussi à faire tourner le récipient **(2)** en rotation sur lui-même autour d'un axe vertical **(Y)** proche de l'axe de symétrie de l'article,
      - et pour chaque incrément de rotation (θ) du récipient **(2)** sur au moins un demi-tour de rotation :

        • à réaliser l'étape de prise d'image du récipient,
        • à analyser lors de l'étape d'analyse,

          * les images des bords gauche et droit de la bague afin de déterminer au moins la coordonnée selon la direction transversale, de la position réelle **(Cr)** de la bague,
          * l'image matricielle du bord gauche afin de déterminer les coordonnées selon les directions transversale et verticale, du point de positionnement gauche Tg **(XTg, YTg),**
* l'image matricielle du bord droit afin de déterminer les coordonnées selon les directions transversale et verticale, du point de positionnement droit Td **(XTd, YTd),**

• à définir, sur une perpendiculaire **(P)** au segment de droite **(T)** passant par les points de positionnement gauche **(Tg)** et droit **(Td),** à la hauteur réelle **(h)** du récipient prise à partir de ce segment de droite **(T),** au moins la coordonnée selon la direction transversale, d'une position théorique **(Ct)** de la bague,

- et à partir des coordonnées de la position réelle **(Cr)** de la bague et de la position théorique **(Ct)** de la bague, prises sur au moins un demi-tour du récipient, à déduire des variations de l'écart de leur position, une mesure de verticalité pour le récipient.

2. Procédé selon la revendication 1, **caractérisé en ce qu'**il consiste à réaliser en tant qu'images matricielles gauche et droite, des images matricielles du talon, de l'épaule et/ou de la base du col afin de mesurer la verticalité du col du récipient, du corps du récipient, et/ou la verticalité totale.

3. Procédé selon la revendication 1 ou 2, caractérisé en ce pour chaque incrément de rotation, on détermine la position réelle **(Cr)** de la bague en analysant une image linéaire ou matricielle comprenant selon la direction transversale la globalité de la bague, en déterminant les positions respectives du bord droit et du bord gauche de la bague et en calculant un point dépendant de ces deux bords.

4. Procédé selon l'une des revendications 1 à 3, **caractérisé en ce qu'**il consiste pour chaque récipient :

- à caractériser la forme et la position initiale du bord gauche et du bord droit du récipient dans la première image matricielle respectivement gauche et droite, prise lors de la rotation du récipient,
- à rechercher, dans chaque image matricielle suivante respectivement gauche et droite prise lors de la rotation du récipient, la forme du bord du récipient respectivement gauche et droit, **caractérisée** dans la première image, afin de déterminer les points de positionnement gauche et droit.

5. Procédé selon la revendication 4, **caractérisé en ce qu'**il consiste à déterminer les points de positionnement gauche et droit, dans l'image initiale en les choisissant de manière à être symétriques par rapport à l'axe de symétrie du récipient, en faisant entre eux une distance de l'ordre du diamètre du plan de pose ou du récipient,

6. Procédé selon la revendication 5, **caractérisé en ce qu'**il consiste à déterminer les points de positionnement gauche et droit dans l'image initiale en les choisissant de manière à les situer dans le plan de pose.

7. Procédé selon l'une des revendications 3 à 6, **caractérisé en ce qu'**il consiste à caractériser la forme du bord droit et du bord gauche du récipient, par au moins le contour du récipient apparaissant dans l'image matricielle et décrit par un ensemble de points et/ou de segments et/ou de portions de courbes, et **en ce qu'**il consiste à rechercher au moins le contour caractérisé dans la première image, dans chaque image suivante, en tentant de superposer au moins ledit contour avec le contour présent dans chaque image suivante à l'aide d'opérations de translation et/ou de rotation.

8. Procédé selon la revendication 1, **caractérisé en ce qu'**il consiste pour chaque type de récipient, à déterminer la distance **(h)** de la position théorique **(Ct)** de la bague par rapport au segment de la droite, à partir d'une mesure ou d'une constante déterminée.

9. Procédé selon la revendication 1, **caractérisé en ce qu'**il consiste à réaliser une image du bord gauche et une image du bord droit incluant une visualisation du bord supérieur du récipient, de manière à déterminer la hauteur du récipient.

10. Dispositif pour mesurer une verticalité sur un récipient **(2)** présentant une bague **(8)** et un fond **(3),** à partir duquel s'élève une paroi verticale **(4)** reliée au fond par un talon **(9),** la paroi verticale **(4)** présentant un col pourvu ou non à sa base d'une épaule, le dispositif comprenant :

- un système de mise en rotation du récipient **(2)** sur lui-même autour de son axe de symétrie vertical **(Y),**
- au moins une caméra disposée d'un côté du récipient et délivrant une séquences d'images du récipient sur au moins un demi-tour de rotation, et dont l'axe optique d'observation **(Z)** est sensiblement orthogonal à l'axe de rotation **(Y)** du récipient, et dont le champ latéral s'étend selon une direction **(X)** orthogonale à l'axe de symétrie vertical **(Y)** et l'axe optique **(Z),**
- une unité d'enregistrement des séquences d'images des récipients,
- une unité d'analyse des images et séquences d'image fournies par au moins la caméra, et reliée à l'unité d'enregistrement,

**caractérisé en ce que** :

- au moins une caméra réalise, pour chaque incrément de rotation (θ) au moins une image des bords gauche **(Ibg)** et droit **(Ibd)** de la bague, l'image matricielle gauche **(Img)** du talon, de l'épaule et/ou de la base du col, l'image matricielle droite **(Imd),** respectivement du talon, de l'épaule et/ou de la base du col de l'article,
- l'unité de traitement assure :

• l'analyse de :

* l'image du bord gauche **(Ibg)** de la bague et l'image du bord droit **(Ibd)** de la bague afin de déterminer au moins la coordonnée selon la direction transversale **(X),** de la position réelle **(Cr)** de la bague,
* l'image matricielle du bord gauche **(Img)** afin de déterminer les coordonnées selon les directions transversale **(X)** et verticale **(Y),** d'un point de positionnement gauche Tg **(XTg, YTg),**
* l'image matricielle du bord droit **(Imd)** afin de déterminer les coordonnées selon les directions transversale **(X)** et verticale **(Y),** d'un point de positionnement droit Td **(XTd, YTd),**

• la prise en compte d'une hauteur réelle **(h)** du récipient,
• la détermination sur une perpendiculaire **(P)** au segment de droite **(T)** passant par les points de positionnement gauche et droit, à la hauteur réelle **(h)** du récipient prise à partir de ce segment de droite **(T),** au moins la coordonnée selon la direction transversale d'une position théorique **(Ct)** de la bague,
• l'analyse des coordonnées de la position réelle **(Cr)** de la bague et de la position théorique **(Ct)** de la bague, prises en considération au cours d'au moins un demi-tour du récipient, pour déduire des variations de l'écart de leur position, une mesure de verticalité pour le récipient.

11. Dispositif selon la revendication 10, **caractérisé en ce qu'**il comprend une caméra linéaire **(21)** dont le réseau est placé dans un plan perpendiculaire à l'axe de rotation et coupant la bague du récipient en-dessous de son sommet, de manière à transmettre à l'unité d'analyse, pour chaque incrément de rotation, une coupe horizontale de la bague, dans laquelle se distinguent les deux bords de la bague.

12. Dispositif selon la revendication 10, **caractérisé en ce qu'**il comprend une caméra matricielle **(21)** dont l'axe optique d'observation passe au voisinage de l'axe vertical de l'article et sous ou en englobant le sommet de la bague, de manière à transmettre à l'unité d'analyse, pour chaque incrément de rotation, une image matricielle de la bague.

13. Dispositif selon la revendication 10, **caractérisé en ce qu'**il comprend, une caméra matricielle **(21)** dont l'axe optique d'observation passe au voisinage de l'axe vertical du récipient et au-dessus du fond du récipient, de manière à ce que les deux talons droit et gauche soient constamment dans son champ d'observation, de manière à transmettre à l'unité d'analyse, pour chaque incrément de rotation, une image matricielle des deux talons.

14. Dispositif selon l'une des revendications 10 à 13, **caractérisé en ce qu'**il comporte un dispositif optique par exemple catoptrique et/ou prismatique installé entre la caméra observant le fond et l'article inspecté, de manière à optimiser le champ, le dit dispositif pouvant être prévu réglable pour l'adapter au diamètre du récipient.

15. Dispositif selon la revendication 9, **caractérisé en ce qu'**il comprend, deux caméras matricielles synchrones dont les axes optiques d'observation respectifs sont orthogonaux à l'axe vertical du récipient et au-dessus du fond du récipient, le champ de la première caméra comprenant uniquement le talon droit, l'autre le talon gauche, de manière à transmettre à l'unité d'analyse, pour chaque incrément de rotation, une image matricielle pour chaque talon.

**Patentansprüche**

1. Verfahren zum Messen einer Vertikalität auf einem Behälter (2), der auf einer Auflageebene aufliegt und einen Ring (8) und einen Boden (3) aufweist, von dem sich eine vertikale Wand (4) erhebt, die durch einen Absatz (9) mit dem Boden verbunden ist, wobei die vertikale Wand (4) einen Hals aufweist, der an seiner Basis mit einer Schulter versehen ist oder nicht, wobei das Verfahren besteht:

- aus dem Anordnen von zumindest einer Kamera auf einer Seite des Behälters, die Bilder des Behälters liefert und deren optische Beobachtungsachse (Z) im Wesentlichen orthogonal zu der vertikalen Achse (Y) des Behälters ist, und deren seitlicher Bereich sich in einer Querrichtung (X) erstreckt, die orthogonal zu der vertikalen Achse (Y) und zu der optischen Achse (Z) ist,
- aus dem Erstellen von zumindest einem Bild des Behälters in einem Schritt des Aufnehmens von Bildern, um das Bild des linken Randes (Ibg) des Rings, das Bild des rechten Randes (Ibd) des Rings, das Rasterbild des linken Randes (Img) des Absatzes, der Schulter und/oder der Basis des Halses, das Rasterbild des rechten Randes (Imd) jeweils des Absatzes, der Schulter und/oder der Basis des Halses zu erhalten,
- aus dem Analysieren in einem Analyseschritt:

  * des Bildes des linken Randes des Rings und des Bildes des rechten Randes des Rings, um die tatsächliche Position (Cr) des Rings zu bestimmen,
  * des Rasterbildes des linken Randes, um einen linken Positionierungspunkt Tg (XTg, YTg) zu bestimmen,
  * des Rasterbildes des rechten Randes, um einen rechten Positionierungspunkt Td (XTd, YTd) zu bestimmen,

- sodass eine tatsächliche Höhe (h) für den Behälter definiert wird,

wobei das Verfahren auch daraus besteht,

- den Behälter (2) sich um sich selbst drehend um eine vertikale Achse (Y) nahe der Symmetrieachse des Artikels drehen zu lassen,
- für jedes Drehinkrement (θ) des Behälters (2) bei zumindest einer halben Umdrehung:

  - aus dem Umsetzen des Schrittes des Aufnehmens eines Bildes des Behälters,
  - aus dem Analysieren in dem Analyseschritt:

    * der Bilder des linken und rechten Randes des Rings, um zumindest die Koordinate in der Querrichtung der tatsächlichen Position (Cr) des Rings zu bestimmen,
    * des Rasterbildes des linken Randes, um die Koordinaten in der Quer- und vertikalen Richtung des linken Positionierungspunktes Tg (XTg, YTg) zu bestimmen,
    * des Rasterbildes des rechten Randes, um die Koordinaten in der Quer- und vertikalen Richtung des rechten Positionierungspunktes Td (XTd, YTd) zu bestimmen,

  - aus dem Definieren auf einer Senkrechten (P) zu dem rechten Segment (T), die den linken (Tg) und rechten (Td) Positionierungspunkt durchläuft, auf der tatsächlichen Höhe (h) des Behälters ausgehend von diesem rechten Segment (T) zumindest der Koordinaten einer theoretischen Position (Ct) des Rings in der Querrichtung,
  - und aus dem Ableiten einer Messung einer Vertikalität für den Behälter von Variationen der Abweichung ihrer Position ausgehend von den Koordinaten der tatsächlichen Position (Cr) des Rings und der theoretischen Position (Ct) des Rings, die auf zumindest einer halben Umdrehung des Behälters erfasst wurden.

2. Verfahren nach Anspruch 1, **dadurch gekennzeichnet, dass** es aus dem Erstellen von Rasterbildern des Absatzes, der Schulter und/oder der Basis des Halses als linke und rechte Rasterbilder besteht, um die Vertikalität des Halses des Behälters, des Körpers des Behälters und/oder die Gesamtvertikalität zu messen.

3. Verfahren nach Anspruch 1 oder 2, **dadurch gekennzeichnet, dass** für jedes Drehinkrement die tatsächliche Position (Cr) des Rings bestimmt wird, indem ein lineares oder Rasterbild analysiert wird, das in der Querrichtung die Gesamtheit des Rings umfasst, indem die jeweiligen Positionen des rechten Randes und des linken Randes des Rings bestimmt werden und indem ein Punkt abhängig von diesen zwei Rändern berechnet wird.

4. Verfahren nach einem der Ansprüche 1 bis 3, **dadurch gekennzeichnet, dass** es für jeden Behälter besteht:

- aus dem Kennzeichnen der anfänglichen Form und Position des linken Randes und des rechten Randes des Behälters in dem jeweils linken und rechten ersten Rasterbild, das während der Drehung des Behälters aufgenommen wurde,
- aus dem Suchen der Form des jeweils linken und rechten Randes des Behälters in jedem folgenden jeweils linken und rechten Rasterbild, das während der Drehung des Behälters aufgenommen wurde, **gekennzeichnet durch** das erste Bild, um die linken und rechten Positionierungspunkte zu bestimmen.

5. Verfahren nach Anspruch 4, **dadurch gekennzeichnet, dass** es aus dem Bestimmen der linken und rechten Positionierungspunkte in dem anfänglichen Bild besteht, indem sie so gewählt werden, dass sie symmetrisch in Bezug auf die Symmetrieachse des Behälters sind, indem dazwischen ein Abstand in der Größenordnung des Durchmessers der Auflageebene oder des Behälters gebildet wird.

6. Verfahren nach Anspruch 5, **dadurch gekennzeichnet, dass** es aus dem Bestimmen der linken und rechten Positionierungspunkte in dem anfänglichen Bild besteht, indem sie so gewählt werden, dass sie sich auf der Auflageebene befinden.

7. Verfahren nach einem der Ansprüche 3 bis 6, **dadurch gekennzeichnet, dass** es aus dem Kennzeichnen der Form des rechten Randes und des linken Randes des Behälters besteht, durch zumindest die Kontur des Behälters, die in dem Rasterbild erscheint und durch eine Gesamtheit an Punkten und/oder Segmenten und/oder Abschnitten von Kurven beschrieben ist, und dadurch, dass es aus dem Suchen von zumindest der in dem ersten Bild gekennzeichneten Kontur in jedem folgenden Bild besteht, indem versucht wird, zumindest die Kontur mit der in jedem folgenden Bild vorhandenen Kontur mit Hilfe von Verschiebungs- und/oder Drehvorgängen zu überlagern.

8. Verfahren nach Anspruch 1, **dadurch gekennzeichnet, dass** es für jede Art von Behälter daraus besteht, den Abstand (h) der theoretischen Position (Ct) des Rings in Bezug auf das rechte Segment ausgehend von einer Messung oder einer bestimmten Konstanten zu bestimmen.

9. Verfahren nach Anspruch 1, **dadurch gekennzeichnet, dass** es aus dem Erstellen eines Bildes des linken Randes und eines Bildes des rechten Randes besteht, das eine Visualisierung des oberen Randes des Behälters beinhaltet, um die Höhe des Behälters zu bestimmen.

10. Vorrichtung zum Messen einer Vertikalität auf einem Behälter (2), der einen Ring (8) und einen Boden (3) aufweist, von dem sich eine vertikale Wand (4) erhebt, die durch einen Absatz (9) mit dem Boden verbunden ist, wobei die vertikale Wand (4) einen Hals aufweist, der an seiner Basis mit einer Schulter versehen ist oder nicht, wobei die Vorrichtung umfasst:

   - ein System zum Drehen des Behälters (2) um sich selbst um seine vertikale Symmetrieachse (Y),
   - zumindest eine Kamera, die auf einer Seite des Behälters angeordnet ist und eine Sequenz an Bildern des Behälters auf zumindest einer halben Umdrehung liefert, und deren optische Beobachtungsachse (Z) im Wesentlichen orthogonal zu der Drehachse (Y) des Behälters ist, und deren seitlicher Bereich sich in einer orthogonalen Richtung (X) zu der vertikalen Symmetrieachse (Y) und der optischen Achse (Z) erstreckt,
   - eine Aufzeichnungseinheit von Bildsequenzen der Behälter,
   - eine Analyseeinheit von Bildern und Bildsequenzen, die von zumindest der Kamera geliefert werden, und die mit der Aufzeichnungseinheit verbunden ist,

   **dadurch gekennzeichnet, dass**:

   - zumindest eine Kamera für jedes Drehinkrement (θ) zumindest ein Bild des linken (Ibg) und rechten (Ibd) Randes des Rings, das linke Rasterbild (Img) des Absatzes, der Schulter und/oder der Basis des Halses, das rechte Rasterbild (Imd) jeweils des Absatzes, der Schulter und/oder der Basis des Halses des Artikels erstellt,
   - wobei die Verarbeitungseinheit sicherstellt:

      -- die Analyse:

         --- des Bildes des linken Randes (Ibg) des Rings und des Bildes des rechten Randes (Ibd) des Rings, um zumindest die Koordinate der tatsächlichen Position (Cr) des Rings in der Querrichtung (X) zu bestimmen,
         --- des Rasterbildes des linken Randes (Img), um die Koordinaten eines linken Positionierungspunktes Tg (XTg, YTg) in der Quer- (X) und vertikalen Richtung (Y) zu bestimmen
         --- des Rasterbildes des rechten Randes (Imd), um die Koordinaten eines rechten Positionierungspunktes Td (XTd, YTd) in der Quer- (X) und vertikalen Richtung (Y) zu bestimmen,

-- die Berücksichtigung einer tatsächlichen Höhe (h) des Behälters,
-- die Bestimmung zumindest der Koordinate einer theoretischen Position (Ct) des Rings in der Querrichtung auf einer Senkrechten (P) zu dem rechten Segment (T), die den linken und rechten Positionierungspunkt durchläuft, auf der tatsächlichen Höhe (h) des Behälters ausgehend von diesem rechten Segment (T),
-- die Analyse der Koordinaten der tatsächlichen Position (Cr) des Rings und der theoretischen Position (Ct) des Rings, berücksichtigt im Verlauf von zumindest einer halben Umdrehung des Behälters, um von Variationen der Abweichung ihrer Position eine Messung der Vertikalität für den Behälter abzuleiten.

**11.** Vorrichtung nach Anspruch 10, **dadurch gekennzeichnet, dass** sie eine Zeilenkamera (21) umfasst, deren Anordnung in einer Ebene senkrecht zu der Drehachse platziert ist und den Ring des Behälters unter seinem Scheitel schneidet, um an die Analyseeinheit für jedes Drehinkrement einen horizontalen Schnitt des Rings zu übertragen, in dem sich die zwei Ränder des Rings unterscheiden.

**12.** Vorrichtung nach Anspruch 10, **dadurch gekennzeichnet, dass** sie eine Matrixkamera (21) umfasst, deren optische Beobachtungsachse in der Nähe der vertikalen Achse des Artikels und unter dem Scheitel des Rings oder diesen einschließend verläuft, um an die Analyseeinheit für jedes Drehinkrement ein Matrixbild des Rings zu übertragen.

**13.** Vorrichtung nach Anspruch 10, **dadurch gekennzeichnet, dass** sie eine Matrixkamera (21) umfasst, deren optische Beobachtungsachse in der Nähe der vertikalen Achse des Behälters und über dem Boden des Behälters verläuft, sodass die zwei rechten und linken Absätze in ihrem Beobachtungsbereich konstant sind, um an die Analyseeinheit für jedes Drehinkrement ein Matrixbild der zwei Absätze zu übertragen.

**14.** Vorrichtung nach einem der Ansprüche 10 bis 13, **dadurch gekennzeichnet, dass** sie eine optische Vorrichtung umfasst, zum Beispiel katoptrisch und/oder prismatisch, die zwischen der Kamera installiert ist, die den Boden und den geprüften Artikel beobachtet, um den Bereich zu optimieren, wobei die Vorrichtung regelbar vorgesehen sein kann, um sie an den Durchmesser des Behälters anzupassen.

**15.** Vorrichtung nach Anspruch 9, **dadurch gekennzeichnet, dass** sie zwei synchrone Matrixkameras umfasst, deren jeweilige optische Beobachtungsachsen orthogonal zu der vertikalen Achse des Behälters und über dem Boden des Behälters sind, wobei der Bereich der ersten Kamera einzig den rechten Absatz, der andere den linken Absatz umfasst, um an die Analyseeinheit für jedes Drehinkrement ein Matrixbild für jeden Absatz zu übertragen.

**Claims**

**1.** A method of measuring lean on a container (2) standing on a support surface and presenting a ring (8) and a bottom (3) from which there rises a vertical wall (4) connected to the bottom by a heel (9), the vertical wall (4) presenting a neck that is optionally provided at its base with a shoulder, and the method consisting in:

- placing at least one camera on one side of the container to deliver images of the container, the camera having at optical observation axis (Z) that is substantially orthogonal to the vertical axis (Y) of the container, with a lateral field that extends in a transverse direction (X) orthogonal to the vertical axis (Y) and to the optical axis (Z);
- taking, during a step of taking images, at least one image of the container so as to obtain the image (Ibg) of the left edge of the ring, the image (Ibd) of the right edge of the ring, the matrix image (Img) of the left edge of the heel, of the shoulder, and/or of the base of the neck, the matrix image (Imd) of the right edge, respectively of the heel, of the shoulder, and/or of the base of the neck,
- analyzing, during an analysis step:

* the images of the left and right edges of the ring in order to determine the real position (Cr) of the ring;
* the matrix image of the left edge in order to determine a left positioning point Tg (XTg, YTg),
* the matrix image of the right edge in order to determine a right positioning point Td (XTd, YTd),

Such that:

- a real height (h) for the container is defined,
- the method also consisting in causing the container (2) to revolve about a vertical axis (Y) close to the axis of symmetry of the article;

- and for each increment in rotation ($\theta$) of the container (2) through at least half a revolution:

• performing the step of taking one image of the container,
• analyzing during the analysis step,

\* the images of the left and right edges of the ring in order to determine at least the coordinate in the transverse direction of the real position (Cr) of the ring;
\* the matrix image of the left edge in order to determine the coordinates along the transverse and vertical directions of the left positioning point Tg (XTg, YTg);
\* the matrix image of the right edge in order to determine the coordinates in the transverse and vertical directions of the right positioning point Td (XTd, Ytd);

• determining at least the coordinate in the transverse direction of a theoretical position (Ct) of the ring on a perpendicular (P) to the straight line segment (T) passing through the left and right positioning points (Tg) and (Td), at the real height (h) of the container taken from this straight line segment (T);

- and on the basis of the coordinates of the real position (Cr) of the ring and of the theoretical position (Ct) of the ring, taken over at least half a revolution of the container, deducing a measurement of the lean of the container from the variations in the difference between their positions.

2. The method according to claim 1, **characterized in that** it consists in taking as left and right matrix images, matrix images of the heel, of the shoulder, and/or of the base of the neck in order to measure the lean of the neck of the container, of the body of the container, and/or its total lean.

3. The method according to claim 1 or claim 2, **characterized in that** for each increment in rotation, the real position (Cr) of the ring is determined by analyzing a linear or matrix image containing the entire ring in the transverse direction, in determining the respective positions of the right and left edges of the ring, and by calculating a point that depends on these two edges.

4. The method according to any one of claims 1 to 3, **characterized in that**, for each container, it consists in:

- characterizing the initial position and shape of the left and right edges of the container in the first left and right matrix images respectively taken during rotation of the container;
- searching, respectively in each of the following left and right matrix images taken during rotation of the container for the shape respectively of the left and right edges of the container as **characterized in** the first image in order to determine the left and right positioning points.

5. The method according to claim 4, **characterized in that** it consists in determining the left and right positioning points in the initial image by selecting them to be symmetrical about the axis of symmetry of the container, and by spacing them apart at a distance of the same order as the diameter of the support surface or of the container.

6. The method according to claim 5, **characterized in that** it consists in determining the left and right positioning points in the initial image by selecting them so as to situate them in the support surface.

7. The method according to any one of claims 3 to 6, **characterized in that** it consists in characterizing the shape of the right and left edges of the container by at least the outline of the container that appear in the matrix image as described by a set of points and/or of segments and/or curved portions, and **in that** it consists in searching at least for the outline **characterized in** the first image in each of the following images, by attempting to superpose at least said outline on the outline present in each following image by using operations of translation and/or of rotation.

8. The method according to claim 1, **characterized in that**, for each type of container, it consists in determining the distance (h) of the theoretical position (Ct) of the ring relative to the straight line segment from a determined constant or measurement.

9. The method according to claim 1, **characterized in that** it consists in taking a left edge image and a right edge image including viewing the top edge of the container in order to determine the height of the container.

10. A device for measuring lean of a container (2) presenting a ring (8) and a bottom (3) from which there rises a vertical wall (4) connected to the bottom by a heel (9), the vertical wall (4) presenting a neck that is optionally provided at its base with a shoulder, the device comprising:

- a system for causing the container (2) to revolve about its vertical axis of symmetry (Y);
- at least one camera arranged on one side of the container and delivering sequences of images of the container over at least half a revolution, and having an optical observation axis (Z) that is substantially orthogonal to the axis of rotation (Y) of the container, with a lateral field that extends in a direction (X) orthogonal to the vertical axis of symmetry (Y) of the optical axis (Z);
- a storage unit for storing image sequences of containers; and
- a unit for analyzing images and image sequences supplied at least by the camera, and connected to the storage unit;

**characterized in that**:

- for each increment in rotation (θ) at least one camera takes at least one image of the left and right edges (Ibg, Ibd) of the ring, the left matrix image (Img) of the heel, of the shoulder, and/or of the base of the neck, the right matrix image (Imd) respectively of the heel, of the shoulder, and/or of the base of the neck of the article;
- the processor unit serves to:

  • analyze:

  * the images (Ibg, Ibd) of the left and right edges of the ring in order to determine at least the coordinate in the transverse direction (X) of the real position (Cr) of the ring;
  * the matrix image (Img) of the left edge in order to determine the coordinates in the transverse and vertical directions (X, Y) of a left positioning point Tg (XTg, YTg);
  * the matrix image (Imd) of the right edge in order to determine the coordinates in the transverse and vertical directions (X, Y) of a right positioning point Td (XTd, YTd);

  • take account of the real height (h) of the container;
  • determine at least the coordinate in the transverse direction of a theoretical position (Ct) of the ring on a perpendicular (P) to the straight line segment (T) passing through the left and right positioning points at the real height (h) of the container taken from the straight line segment (T);
  • analyze the coordinates of the real position (Cr) of the ring and the theoretical position (Ct) of the ring taken into consideration during at least half a revolution of the container, in order to deduce a measurement of the lean for the container from the variations in the differences of their positions.

11. The device according to claim 10, **characterized in that** it includes a linear camera (21) having its array placed in a plane perpendicular to the axis of rotation and intersecting the ring of the container beneath its top, so as to act, for each increment in rotation, to transmit to the analysis unit a horizontal section of the ring in which the two edges of the ring are distinguished.

12. The device according to claim 10, **characterized in that** it includes a matrix camera (21) having its optical observation axis pass close to the vertical axis of the article and under or including the top of the ring so as to act for each increment in rotation, to transmit to the analysis unit a matrix image of the ring.

13. The device according to claim 10, **characterized in that** it includes a matrix camera (21) having its optical observation axis pass close to the vertical axis of the container and above the bottom of the container so that the two left and right heels are constantly in its field of observation so as to act, for each increment in rotation, to transmit to the analysis unit a matrix image of both heels.

14. The device according to any one of claims 10 to 13, **characterized in that** it includes an optical device, e.g. a catoptric and/or a prismatic optical device installed between the camera observing the bottom and the article being inspected, so as to optimize the field, said device possibly being made to be adjustable in order to adapt to the diameter of the container.

15. The device according to claim 9, **characterized in that** it includes two synchronous matrix cameras having respective optical observation axes that are orthogonal to the vertical axis of the container and above the bottom of the container, the field of the first camera covering solely the right heel, the heel of the other camera covering solely the left heel, so as to act, for each increment in rotation, to transmit to the analysis unit a matrix image of each heel.

**FIG.1**

**FIG.2**

FIG.3

FIG.4

FIG.5

FIG.6

FIG.7

FIG.8

FIG.9

FIG.10

EP 2 934 771 B1

Cr — Ct

h⟩  ⟨P

FIG.11

Tg    T    Td

d

ΔX

FIG.12

23

**EP 2 934 771 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4433785 A
- US 7010863 B
- EP 0341849 A
- FR 2973501
- US 6212962 B
- WO 2012042582 A
- US 2011141265 A
- US 6025910 A